Europäisches Patentamt

European Patent Office

Office européen des brevets

(11) Numéro de publication: **0 042 342**
**A1**

## (12) DEMANDE DE BREVET EUROPEEN

(21) Numéro de dépôt: **81400950.2**

(22) Date de dépôt: **15.06.81**

(51) Int. Cl.³: **B 01 D 46/30**

(30) Priorité: **16.06.80 FR 8013296**

(43) Date de publication de la demande: **23.12.81**
**Bulletin 81/51**

(84) Etats contractants désignés: **AT BE CH DE GB IT LI LU NL SE**

(71) Demandeur: **Etablissement public dit: CHARBONNAGES DE FRANCE, 9, Avenue Percier, F-75008 Paris (FR)**

(72) Inventeur: **Merry, Jean-Louis, 68 rue de la Vallée, F-60550 Verneuil-en-Halatte (FR)**

(74) Mandataire: **Rinuy, Guy et al, Cabinet Rinuy et Santarelli 14, Avenue de la Grande Armée, F-75017 Paris (FR)**

(54) **Procédé et appareil de dépoussiérage des gaz par filtration avec nettoyage du filtre par aspiration et application aux gaz de combustion.**

(57) La présente invention concerne la filtration des gaz chargés de poussières, en particulier de gaz de combustion encore chauds.

Elle consiste à faire passer les gaz à dépoussiérer (16) de haut en bas sur un lit de mantière pulvérulente (13), en particulier un lit de sable, et à nettoyer la couche supérieure du lit par aspiration (18, 19, 20) des poussières qui s'y sont déposées.

L'invention convient particulièrement pour le dépoussiérage de gaz de combustion des chaudières ou des centrales thermiques ou d'alimentation des turbines à gaz.

"Procédé et appareil de dépoussiérage des gaz par filtration avec nettoyage du filtre par aspiration et application aux gaz de combustion"

La présente invention concerne un procédé et un appareil pour le dépoussiérage des gaz, par filtration à travers un lit de matière pulvérulente.

Dans les dispositifs connus de ce genre, les gaz chargés de poussière pénètrent, en général, latéralement dans un lit de sable qu'ils traversent de bas en haut et le sable est régénéré par soutirage en continu par gravité. Ces dispositifs impliquent la manipulation de la totalité du lit pour assurer sa régénération ; l'efficacité de la filtration est réduite du fait du mouvement permanent des grains de sable et l'introduction des gaz à dépoussiérer dans le lit de sable nécessite en général l'utilisation de grilles métalliques qui limitent la température maximale du gaz à traiter.

L'invention permet d'éviter ces inconvénients.

Elle consiste en un procédé selon lequel on fait passer verticalement de haut en bas le courant de gaz chargé de poussières à travers un lit de matière filtrante pulvérulente, dont on nettoie la couche supérieure par aspiration des poussières qui s'y sont déposées.

L'aspiration, qui peut être continue ou non, s'effectue de préférence par déplacement de l'élément d'aspiration à la surface supérieure du lit, sans interruption du passage du gaz à dépoussiérer à travers le lit ; au cours de ce déplacement, on peut faciliter l'aspiration par un brassage, un ratissage, ou un raclage de la couche supérieure du lit de matière pulvérulente, qui est généralement du sable ou toute matière en grains analogue, naturelle ou artificielle.

La matière pulvérulente constituant la couche supérieure du lit est généralement constituée par du sable. Elle peut toutefois être formée de toute autre matière naturelle ou artificielle, en général réfractaire, de granulométrie equivalente, telle que : alumine, graphite, carbure de silicium, produits céramiques, etc. Dans certains cas, elle peut être constituée des grains de poussière filtrés eux-mêmes, ce qui évite alors d'avoir à recycler la matière pulvérulente.

La présente invention consiste également en un appareil de dépoussiérage de gaz dans lequel un dispositif d'aspiration, de préférence mobile, est prévu pour enlever les poussières déposées sur la couche supérieure du lit de matière filtrante pulvérulente.

L'invention faisant l'objet du présent brevet va maintenant être décrite dans un but purement illustratif et nullement limitatif à l'aide des dessins ci-joints sur lesquels :

- la figure 1 représente en coupe verticale une vue schématique d'un mode de réalisation ;

- la figure 2 représente une vue partielle de droite du dispositif de la figure 1 ; et

- les figures 3 et 4 représentent respectivement des vues verticale et horizontale du dispositif d'aspiration des poussières et de retour du sable utilisé dans les figures précédentes 1 et 2.

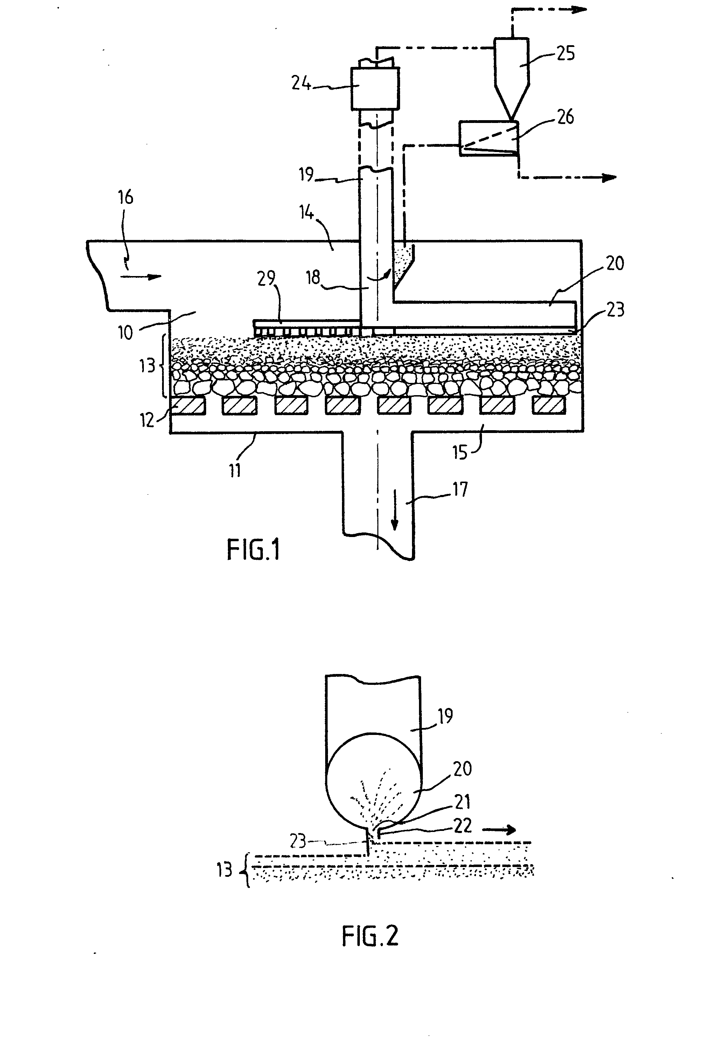

En se reportant plus particulièrement à la figure 1, l'appareil selon l'invention comprend un récipient 10 de forme cylindrique dans lequel on a disposé, à quelque distance du fond 11, une grille 12 en matière céramique.

Cette grille 12 va servir de support au lit 13 de matière filtrante qui comprend une succession de matières pulvérulentes dont la granulométrie va en diminuant à partir du bas.

C'est ainsi qu'on peut prévoir par exemple de disposer sur la grille 12 d'abord une couche de graviers dont le diamètre des grains est de l'ordre de 10 mm, ensuite une couche de graviers dont le diamètre des grains est de l'ordre de 3 mm, puis une couche de sable de Dieppe concassé ayant un diamètre de grains de 1 mm environ, et enfin une couche de sable de Fontainebleau ayant un diamètre de grains de 0,2 à 0,3 mm environ.

Ce lit de matière pulvérulente 13 divise l'intérieur du récipient 10 en une chambre supérieure 14, dans laquelle débouche à sa périphérie, une tuyauterie 16 d'entrée du gaz à dépoussiérer, et en une chambre inférieure 15 munie d'une tuyauterie 17 de sortie du gaz épuré, situé dans l'axe du récipient 10.

Le dispositif d'aspiration comprend une conduite en forme de L portant la référence 18 dans laquelle on peut maintenir une certaine succion par un système non représenté sur le dessin.

La conduite 18 en forme de L comporte un bras vertical 19, disposé dans l'axe du récipient 10 et monté à rotation avec un système d'étanchéité sur le récipient 10, et un bras horizontal 20 s'étendant du centre à la périphérie de ce dernier pour en balayer toute la superficie.

Le bras 20 est muni sur toute sa longueur d'une fente 21 délimitée par deux parois verticales de hauteur inégale dont l'une 22, située côté aval par rapport au sens de déplacement du bras 20, affleure le sommet de la couche supérieure du lit de matière pulvérulente et dont l'autre 23, situé côté amont, pénètre dans cette couche (voir figure 2).

Les matières aspirées dans la conduite 18 passent dans un échangeur de chaleur 24, puis dans un cyclone 25, où on sépare du gaz épuré, qui peut être recyclé et des particules solides qui peuvent être envoyées sur un crible 26 (figure 1).

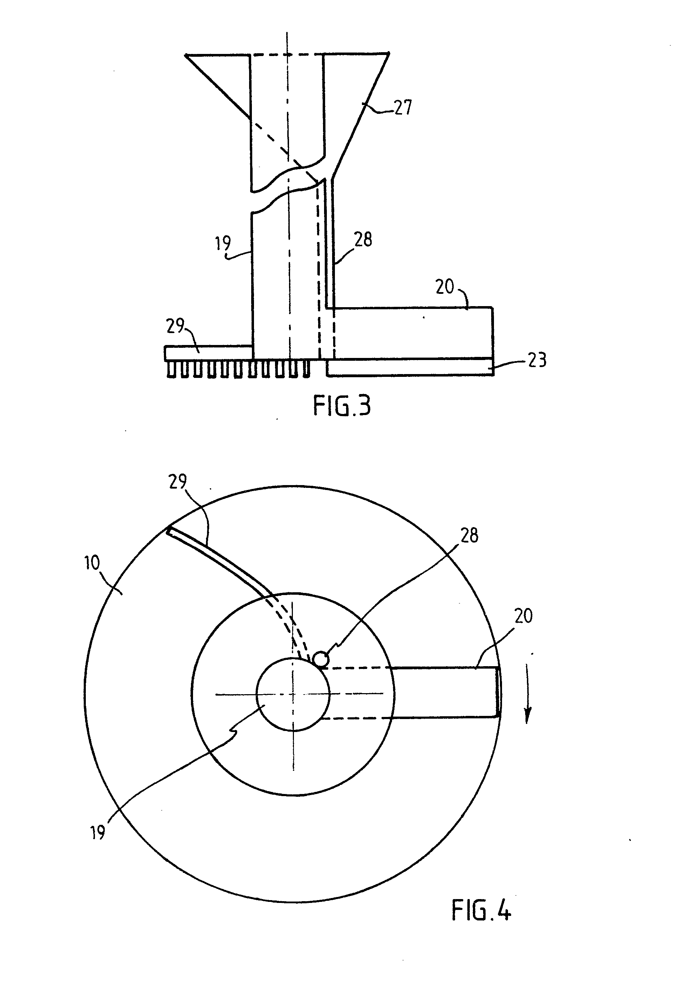

Le refus du crible est constitué par du sable qui retourne par une trémie 27 et une chute 28 au centre du récipient 10 où il est étalé par un rateau 29 solidaire de la conduite 18 (figures 3 et 4).

L'appareil selon l'invention fonctionne de la manière suivante : les gaz à dépoussiérer pénètrent par la tuyauterie 16 dans la chambre supérieure 14 à une pression $P_1$ et ils ressortent épurés après passage à travers le lit 13 par la tuyauterie 17 où règne une pression $P_2$ inférieure à $P_1$.

Au cours de leur passage à travers le lit de matière pulvérulente 13, les gaz déposent les poussières dont ils sont chargés sur la couche supérieure de ce lit.

Le dispositif d'aspiration fonctionne soit de manière continue, soit par intermittence lorsque la différence des pressions $P_1$ et $P_2$ atteint une valeur limite.

Dès qu'il se produit une aspiration par création à l'intérieur de la conduite 18 d'une pression $P_3$ inférieure

à $P_1$, la conduite 18 entre en rotation et le bras 20 se déplace dans le sens indiqué sur les figures 2 et 4.

Au cours de ce déplacement, la paroi 23 racle la couche supérieure du sable sur laquelle se sont déposées les poussières et ce brassage superficiel facilite leur aspiration dans le bras 20.

Les poussières sont aspirées dans le bras 19 et sont séparées des gaz dans le cyclone 25 puis elles passent dans le crible 26 où les grains de sable entraînés sont renvoyés sur le lit 13, les poussières pouvant être récupérées pour être brûlées s'il s'agit de poussières combustibles.

Un tel appareil est simple et efficace et il permet de nettoyer le filtre rapidement sans recyclage de la totalité de la matière filtrante et sans interrompre les opérations de filtration.

Il est particulièrement intéressant pour le dépoussiérage de gaz chaud, notamment les gaz de combustion provenant de chaudières à mazout, de centrales thermiques, de l'industrie céramique, de gazogène ou des chaudières à charbon pulvérisé dans lesquelles il permet de réduire les dimensions du foyer, en arrêtant les imbrûlés et de diminuer les dimensions des échangeurs ; il trouve également son application pour le traitement du gaz d'alimentation des turbines à gaz.

0042342

## REVENDICATIONS

1. Procédé de dépoussiérage de gaz, notamment de gaz chauds par filtration à travers un lit de matière pulvérulente, caractérisé en ce qu'on fait passer verticalement de haut en bas un courant de gaz chargé de poussière et en ce qu'on nettoie la couche supérieure de ce lit par aspiration des poussières qui s'y sont déposées.

2. Procédé selon la revendication 1, caractérisé en ce que l'aspiration des poussières déposées sur la couche supérieure du lit de matière filtrante s'effectue en continu ou par intermittence par déplacement du dispositif d'aspiration sur cette couche et sans interruption du passage des gaz à dépoussiérer à travers le lit.

3. Procédé selon la revendication 2, caractérisé en ce que la couche supérieure du lit de matière filtrante est du sable et en ce que l'aspiration des poussières qui s'y sont déposées s'effectue avec raclage de la couche de sable.

4. Procédé selon l'une quelconque des revendications précédentes, caractérisé en ce que la matière aspirée à la surface du lit est, après éventuellement abaissement de sa température, séparée en gaz à recycler et en matière solide qui peut être à son tour séparée en matière filtrante à recycler et en poussière.

5. Appareil de dépoussiérage du gaz, notamment de gaz chauds par filtration à travers un lit de matière pulvérulente (13), caractérisé en ce qu'il comprend un dispositif d'aspiration (18-20) susceptible d'absorber les poussières déposées sur la couche supérieure du lit de matière filtrante.

6. Appareil selon la revendication 5, caractérisé en ce que le dispositif d'aspiration est mobile et peut se déplacer en continu ou par intermittence à la surface de la couche supérieure du lit (13), de préférence la couche supérieure du lit de matière filtrante étant du sable et le

6.

dispositif d'aspiration comportant une ouverture de succion (21) dont l'une des parois forme une racle (23) pénétrant à l'intérieur de la couche de sable, de manière à faciliter le guidage et l'aspiration des poussières qui s'y sont déposées.

7. Appareil selon l'une quelconque des revendications 5 ou 6, caractérisé en ce que le lit de matière filtrante (13) est disposé dans un récipient cylindrique (10) comprenant une entrée supérieure des gaz à dépoussiérer (16) située au-dessus du niveau du lit et une sortie inférieure des gaz dépoussiérés (17) située en dessous du lit et en ce que le dispositif d'aspiration consiste en un bras suceur radial (20) balayant la totalité de la superficie du récipient, présentant une ouverture de succion (21) tournée vers le lit et monté à rotation sur l'axe (19) du récipient (10).

8. Appareil selon l'une quelconque des revendications 5 à 7, caractérisé en ce que le circuit suivi par les matières aspirées par le dispositif d'aspiration est un circuit fermé comprenant successivement, outre un échangeur de chaleur éventuel (24), un cyclone de séparation (25) en gaz et solides et un crible (26) de séparation des solides avec renvoi (par 27-28) du refus dans le récipient contenant le lit de matière filtrante.

9. Appareil selon l'une quelconque des revendications 5 à 8, caractérisé en ce que le lit de matière filtrante pulvérulente comporte successivement du haut vers le bas une couche supérieure de sable fin dont les grains ont un diamètre inférieur à 1 mm et une ou plusieurs couches inférieures de matière pulvérulente dont la dimension des particules va en croissant au fur et à mesure qu'il descend, le lit reposant sur une grille en matière céramique.

10. Application du procédé selon l'une quelconque des revendications 1 à 4 ou de l'appareil selon l'une quelconque des revendications 5 à 9, au dépoussiérage des gaz chauds de combustion, notamment dans les chaudières et les centrales thermiques ou au dépoussiérage du gaz d'alimentation de turbines à gaz.

FIG.1

FIG.2

FIG.3

FIG.4

# RAPPORT DE RECHERCHE EUROPEENNE

| Catégorie | Citation du document avec indication, en cas de besoin, des parties pertinentes | Revendica-tion concernée |
|---|---|---|
| | DE - A - 2 554 287 (THE ANACONDA) <br> * figures 1 à 3; page 4, dernier alinéa; page 7, avant-dernier alinéa à page 12, premier alinéa * | 1,5,6, 7 |
| A | US - A - 3 871 846 (M. BERZ) | |
| A | DE - A - 2 332 377 (STAHLWERKE ROCHLING) | |
| A | GB - A - 135 216 (L.B. FIECHTER) | |

## DOCUMENTS CONSIDERES COMME PERTINENTS

### CLASSEMENT DE LA DEMANDE (Int. Cl.³)

B 01 D 46/30

### DOMAINES TECHNIQUES RECHERCHES (Int. Cl.³)

B 01 D 46/00
F 23 J 15/00

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 04.09.1981 | BOGAERTS |

OEB Form 1503.1  06.78